# EUROPEAN PATENT APPLICATION

(11) **EP 4 406 393 A1**
(43) Date of publication of application: **31.07.2024**
(21) Application number: 24382044.6
(22) Date of filing: 17.01.2024
(51) Int. Cl.: A01B 39/18

(54) **DEVICE FOR INTER-ROW TILLAGE OF WOODY CROPS**

(30) Priority: 17.01.2023 ES 202330069 U
(71) Applicant: Industrias David S.L.U., 30510 Yecla (Murcia) (ES)
(72) Inventor: LÓPEZ MARTÍNEZ, Javier, 30510 YECLA (Murcia) (ES)
(74) Representative: Herrero & Asociados, S.L.

(57) **Abstract**

Device for inter-row tillage of woody crops connectable to a frame attached to the rear of a tractor which moves along tramlines defined between two contiguous rows following a direction of travel (DA), the device comprising:
- a rigid chassis (1), removably attachable to the frame;
- a pivoting chassis (2), linked to the rigid chassis (1) via a pivoting longitudinal axis (3); and
- a drive mechanism (4) for pivoting the pivoting chassis (2) relative to the rigid chassis (1).

The pivoting chassis comprises:
- a self-supporting side feeler (5) comprising a multi-positional oscillating rod (7); and
- a tool holder support (6) for attaching accessories and soil tillage tools.

## Description

### OBJECT OF THE INVENTION

The present invention falls within the technical field of machines specially designed for working cultivated land, in particular for working in vineyards and orchards of woody crops arranged in rows and refers in particular to a device for tilling between rows of woody crops. The device is especially designed for vineyards but can also be used for other high-value woody crops such as olive groves, almond orchards, citrus groves and others.

### BACKGROUND TO THE INVENTION

The ploughing of woody crops is normally carried out by agricultural tractors pulling ploughs, which move along the lanes defined between the rows of these crops. Logically, these ploughs cannot access the spaces defined between the trunks, which is why conventional ploughs are usually fitted with auxiliary cultivators consisting of blades suitably mounted on the plough frame or on the ploughshare arms. These blades can be swung away from the trunk to avoid damage to the trunk.

Machines designed for inter-row tillage, also known as inter-row machines, are agricultural machines designed to work laterally to the path of the tractor that is towing or pushing them. This makes it possible to work in the spaces defined between each plant in a row.

In fact, these inter-row machines have a tool or working unit which can move relative to the tractor coupling frame, since between the two there is a device (hydraulic, mechanical or electrical) for the automatic retraction of this working unit towards the tractor transit zone, each time a suitable probe element, of a known type and in a forward position, finds the trunk of a plant. Such a probe element is also known as a feeler.

The same device, once the obstacle to be crossed has been overcome, automatically returns the working unit to its position so that it protrudes laterally from the machine between one level of the row and the next.

Several documents relating to inter-row devices are known in the current state of the art. For example, document EP3824708 describes a machine for working between rows that has one or two working units, each one preceded by a feeler element that activates, at each obstacle to be avoided, a known device (hydraulic, pneumatic, or electric) for the transversal movement of the path and the row. The encounter of each feeler with the obstacle to be avoided causes the tool of the corresponding working unit to rotate in such a way that the translation of the latter, which is transverse to the path of travel of the tractor, is directly proportional to the angular displacement made by the tool and communicated by an electromagnetic sensor of a known type to the electronic controller of the machine.

Another example can be found in document EP2062472, which describes a tool holder that allows an obstacle in a row to be circumvented. The holder has a first arm with one end hinged along an axis of rotation to a distal end, and a second arm on which a tool is located. One end of the arm articulates along an axis of rotation to another end of the arm, where the axis of rotation is parallel to the axis of rotation. A pneumatic actuator is inserted between the arm and an arm extension, wherein the arm extension is arranged opposite the axis of rotation with respect to the axis of rotation.

Finally, document ES1065210 describes an inter-row cultivator for vineyards. The cultivator incorporates a tilting blade, driven by a double-acting hydraulic cylinder through a distributor that receives information from a sensing rod, so that when this rod comes into contact with a vine, the blade retracts or tilts. The blade is configured so that the lower end of its drive shaft is raised above the ground, the blade is equipped with height adjustment means to vary its working depth at will, and the sensing rod is in turn equipped with means to regulate its degree of sensitivity.

In short, all inter-row ploughing devices comprise a support axle or tool-holding axle on which tools (blade, mower, etc.) are attached. The device moves between the rows, pulled by the tractor. A sensing element projecting from the inter-row device detects, by contact, the proximity of a plant. When it touches a plant, the sensor sends a signal or activates a cam which causes the axle to move, thus preventing the tool from contacting the plant and damaging it.

### DESCRIPTION OF THE INVENTION

The models currently available on the market can be divided into two main groups, taking as a reference the type of displacement of the tool-holding arm to avoid contact with the trunk of the plant.

In the first type, the tool-holding arm is linked solidly to a pivot shaft, in what is known as a rotary movement or radial movement. The pivot axis is located inside the device at a point centered on the direction of travel of the tractor and perpendicular to the ground plane. The shaft is rotated by means of a drive mechanism which acts in response to the feeler contact.

In the second type, the tool-holding arm is capable of pivoting with respect to an axis located at a point centered with respect to the tractor's direction of travel. In this way, when the feeler contacts a plant, it sends a signal to the drive mechanism which causes the arm to save the plant by making a pivoting movement perpendicular to the direction of travel. This is known as oscillating movement or parallelogram movement.

This applicant has previously developed a device that combines both types of movement, radial and parallelogram, which is basically achieved by offsetting the tool holder's axis of rotation by adding a support for coupling the tools attached perpendicularly, so that the rotation of this axis is off-center with respect to the tools. However, it is desirable to achieve a simpler and more robust device, which ensures that the tool holder can be moved to avoid damaging the logs, but without reducing performance.

The object of the invention consists of a device for inter-row tillage of woody crops in which the aim has been to simplify the displacement of the tool-holder support, which is now of the radial-displacement type only. This device can be connected to a frame attached to the rear of a towing tractor.

For this purpose, the device basically comprises a chassis with two parts: a fixed part, rigidly attached to the frame, and a movable part, attached to the fixed part by means of a pivot axis perpendicular to the ground on which it works.

A side feeler and the tool holder are mounted on the movable part of the chassis; the latter is offset from the axis of rotation and oriented obliquely to the direction of travel of the tractor. A drive mechanism is also fitted between the fixed and movable part of the chassis.

When the feeler physically contacts the trunk of a plant in the row being ploughed, and since the feeler is linked to the drive mechanism, the latter acts and causes the moving part of the chassis, and all the elements connected to it, to change from a working position to a retracted position.

This is achieved by pivoting the mobile part of the chassis on the longitudinal axis. In this way, the tool carrier and the tools attached to it also pivot towards the tractor's transit area, away from the plant and preventing the tools from damaging the trunk. This also explains the above-mentioned concept of radial-shift movement: when the sensor detects an obstacle to be avoided, the drive mechanism acts on the tool holder, causing it to make a radial or pivoting movement. Since the tool carrier is displaced with respect to the axis of rotation, but attached to it, the displacement effected is defined as radial-shift.

### DESCRIPTION OF THE DRAWINGS

In order to complement the description being made and in order to assist in a better understanding of the features of the invention, in accordance with a preferred example of a practical embodiment thereof, a set of drawings is attached hereto as an integral part of the said description, in which the following is illustratively and non-limitingly depicted:

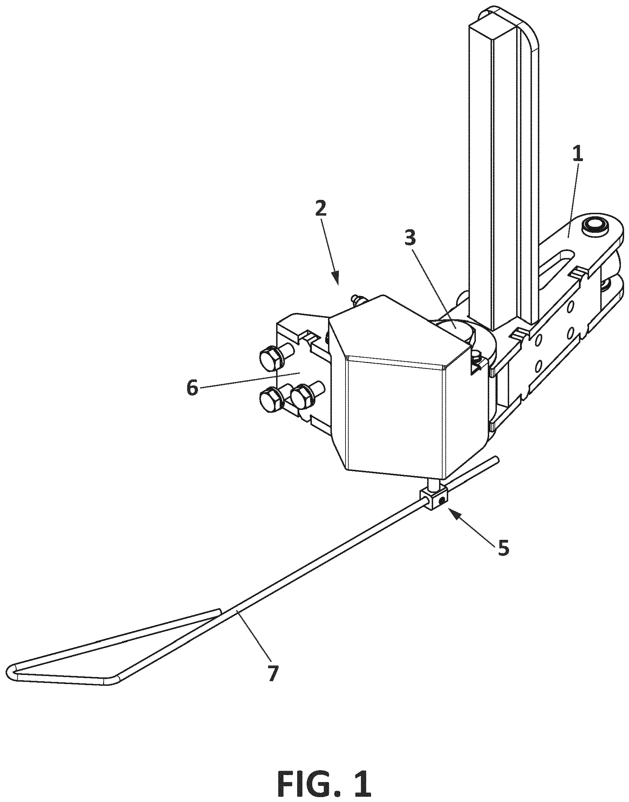

Figure 1.- Shows a front perspective view of the device for inter-row tillage of woody crops.
Figure 2.- Shows a rear perspective view of the device.
Figure 3.- Shows a lower plan view of the device in a first position with respect to the frame corresponding to the working position.
Figure 4.- Shows a right-side view of the device.
Figure 5.- Shows a top plan view of the device, with the chassis and all its elements in working position.
Figure 6.- Shows a top plan view of the device, with the chassis and all its elements in a second position with respect to the frame, corresponding to the retracted position.
Figure 7.- Shows a detail of a section made in the drive mechanism.
Figure 8.- Shows a top plan view of the device connected to a frame attached to the rear of a tow tractor.

### PREFERRED EMBODIMENT OF THE INVENTION

A detailed explanation of an example of a preferred embodiment of the object of the present invention is given below with the aid of the figures referred to above.

The described device for inter-row tillage of woody crops is intended to be towed by a tractor which moves along defined tramlines between two adjacent rows, following a direction of travel (DA). More specifically, the device can be connected to a frame attached to the tractor, preferably at the rear.

For this purpose, the device consists of a rigid chassis (1), which is removably connected to the frame, and a pivoting chassis (2), which is connected to the rigid chassis (1) through a pivoting longitudinal axis (3), so that the pivoting chassis (2) can pivot with respect to the rigid chassis (1) by means of a drive mechanism (4), which also links the rigid chassis (1) to the pivoting chassis (2). The pivoting longitudinal axis (3) is perpendicular to the ground on which it is being worked.

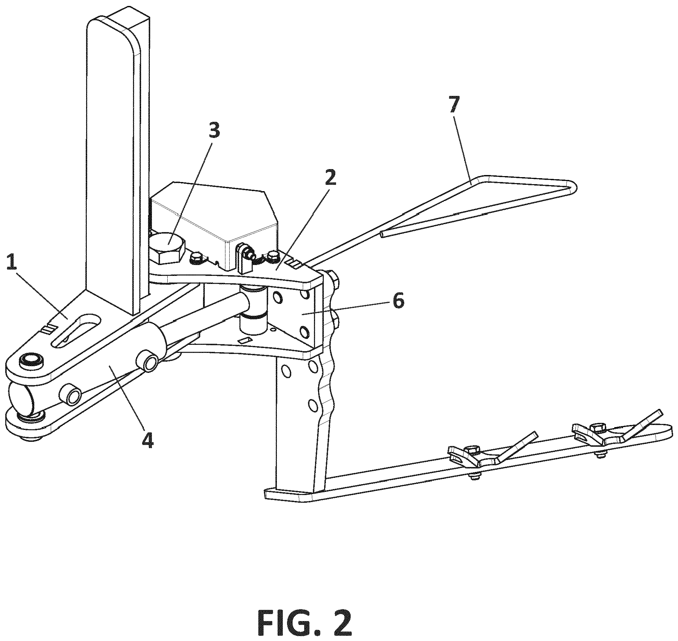

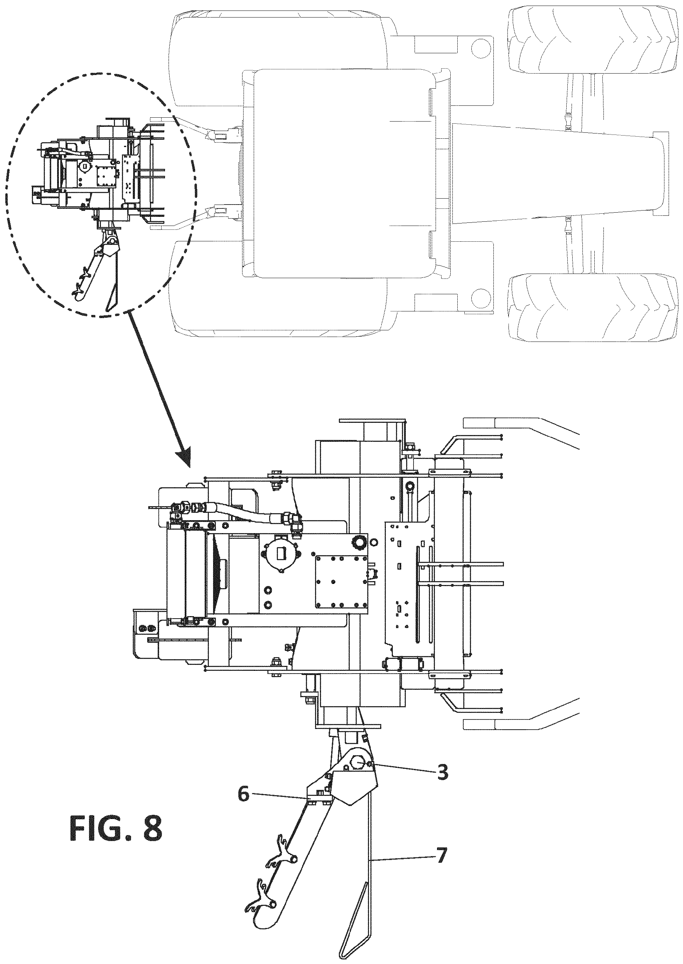

A self-supporting side feeler (5) and a tool holder support (6) are attached to the pivoting chassis (2), as well as the drive mechanism (4), which in this case is housed inside a central box of irregular polyhedral geometry. The tool-holder support (6) is configured as a sector of the pivoting chassis (2) to which different accessories and tools for soil tillage can be attached, such as weeding blades, hoe rotors, mowers or disc ploughs, among others. In the preferred embodiment illustrated in Figures 2-8, the tool holder support (6) is fitted with weeding blades, for example.

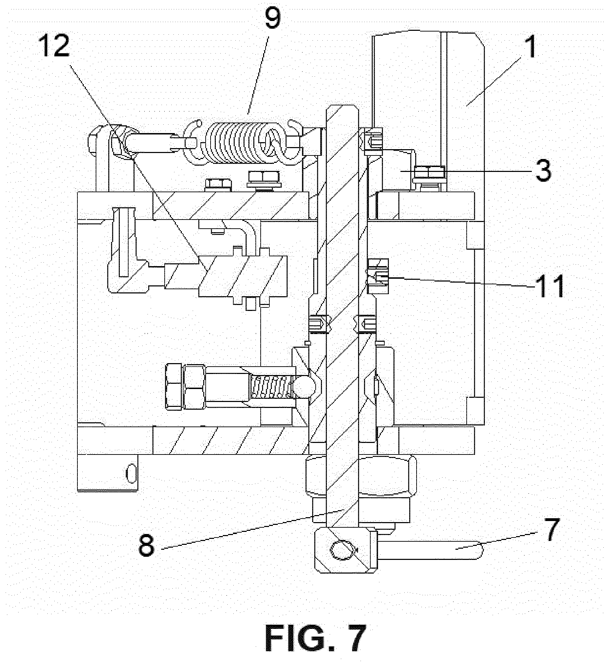

The self-supporting feeler (5) comprises a multi-positional oscillating feeler rod (7) and actuating elements, as shown in detail in the exploded view in figure 7. The displacements of the pivoting chassis (2) relative to the pivoting longitudinal axis (3) also pull the feeler (5), hence the designation self-supporting.

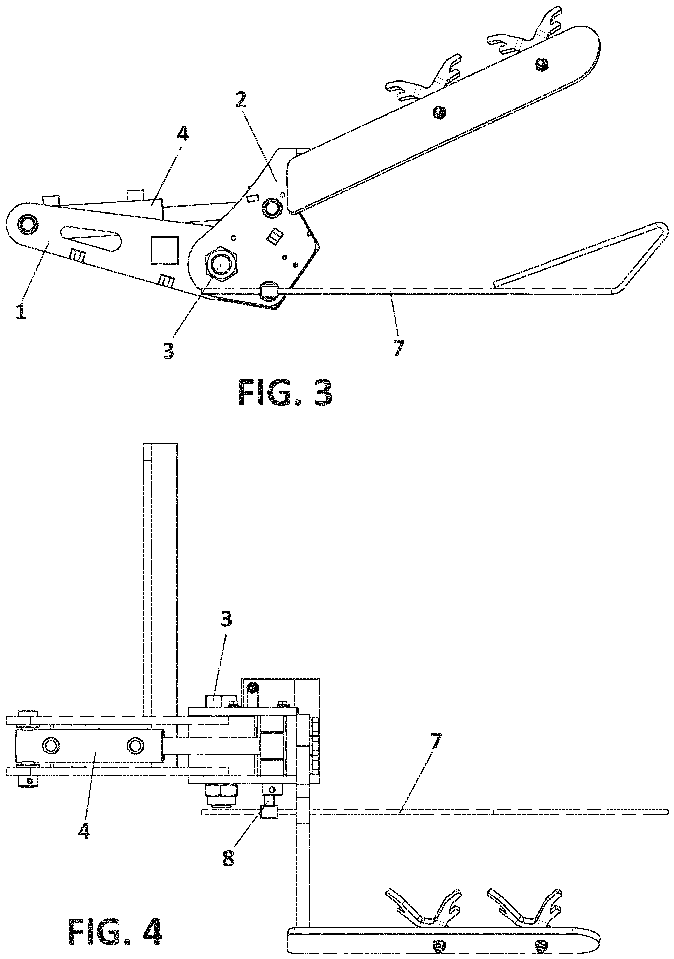

As can be seen in the plan views of Figures 3, 5 and 8, in the working position of the device, the feeler rod (7) is oriented perpendicular to the direction of travel (DA) of the tractor and hangs from the pivoting chassis (2) via a coupling shaft (8) parallel to the pivoting longitudinal axis (3), as shown in Figure 7.

The self-supporting feeler (5) further comprises an upper first spring (9), linked to an upper end of the coupling shaft (8), which causes the feeler rod (7) to return to its rest position when passing an obstacle. A second spring (10) for compression, jacketed by a bushing, compresses a sphere against an indentation of the coupling shaft (8) to fix the rest position of the coupling shaft (8) and prevent it from rebounding under the action of the first spring (9).

The oscillation that occurs in the feeler rod (7) when it contacts an obstacle causes an eccentric (11) linked to the coupling shaft (8) to move. The eccentric (11) is also linked to a sensor (12). As in this preferred embodiment the sensor (12) is of an electrical type, when the feeler rod (7) oscillates and produces a rotation in the coupling shaft (8), and therefore in the eccentric (11), this produces an electrical signal in the said sensor (12).

The plan views in Figures 3, 5 and 8 also show that, in the working position of the device, the tool holder support (6) is oriented obliquely to the direction of travel (DA) of the tractor and is thus also offset from the feeler (5).

In this preferred embodiment, the drive mechanism (4) comprises a hydraulic cylinder. In alternative embodiments of the device, the drive mechanism (4) comprises an electric actuator.

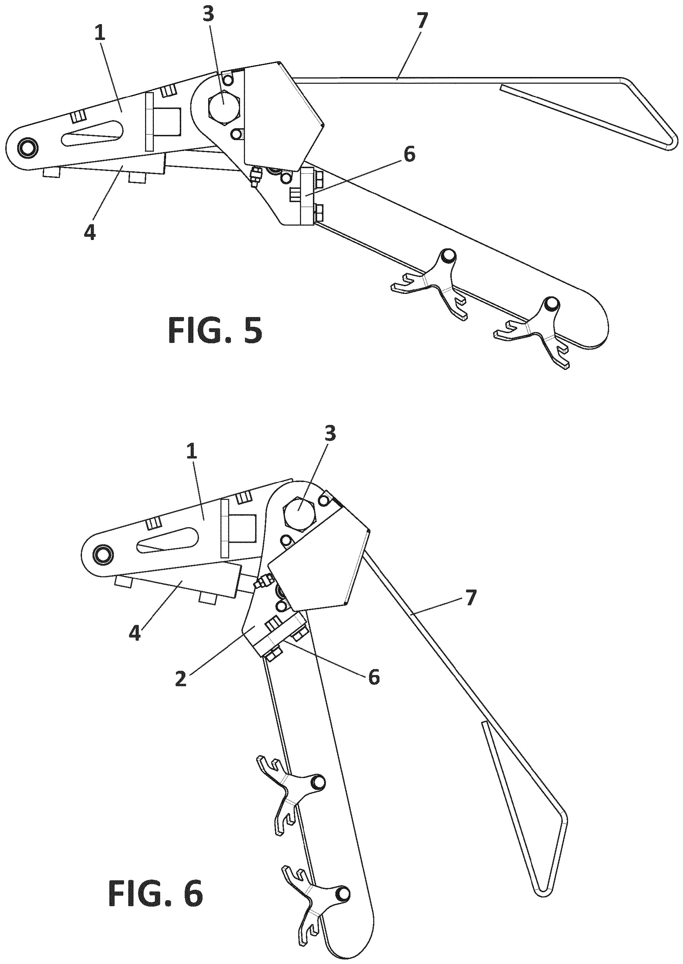

When the feeler rod (7) physically contacts the trunk of a plant in the row being tilled, and since the feeler (5) is linked to the drive mechanism (4), this causes the pivoting chassis (2), and all the elements connected to it, to change from the working position shown in figure 5 to the retracted position shown in figure 6.

This change is produced by pivoting the pivoting chassis (2), pushed by the drive mechanism (4), on the pivoting longitudinal axis (3). In this way, the tool holder support (6), and the tools attached to it, also pivot towards the transit area of the tractor, away from the plant and preventing the tools from damaging the trunk.

Once the obstacle posed by the trunk of the plant has been overcome, the drive mechanism (4) returns the pivoting chassis (2) and all its elements to the working position.

## Claims

1. Device for inter-row tillage of woody crops, connectable to a frame attached to the rear of a tractor which moves along tramlines defined between two adjacent rows following a direction of travel (DA), the device comprising:
- a rigid chassis (1), removably attachable to the frame;
- a pivoting chassis (2), linked to the rigid chassis (1) via a pivoting longitudinal axis (3); and
- a drive mechanism (4) for pivoting the pivoting chassis (2) relative to the rigid chassis (1);
being the device **characterised in that** the pivoting chassis (2) comprises:
- a self-supporting side feeler (5) comprising a multi-positional oscillating rod (7); and
- a tool holder support (6) for attaching accessories and soil tillage tools.

2. Device for inter-row tillage of woody crops according to claim 1 wherein the feeler (5) comprises:
- a coupling shaft (8), parallel to the pivoting longitudinal axis (3), with an upper end linked to the pivoting chassis (2) and a lower end from which the rod (7) hangs;
- an upper first spring (9) linked to the upper end of the coupling shaft (8), to return the rod (7) and the coupling shaft (8) to a rest position when passing an obstacle;
- a second spring (10) for fixing the rest position of the coupling shaft (8) by compression;
- an eccentric (11) attached to the coupling shaft (8); and
- a sensor (12) linked to the eccentric (11).

3. Device for inter-row tillage of woody crops according to claim 2 wherein the sensor (12) is of electrical type.

4. Device for inter-row tillage of woody crops according to any one of the preceding claims where in the working position of the device the feeler rod (7) is oriented perpendicular to the direction of travel (DA) of the tractor.

5. Device for inter-row tillage of woody crops according to any of the preceding claims where in the working position of the device the tool holder support (6) is oriented obliquely to the direction of travel (DA) of the tractor.
